# EUROPEAN PATENT SPECIFICATION

(11) **EP 4 164 262 B1**
(45) Date of publication and mention of the grant of the patent: **21.08.2024**
(21) Application number: 21201003.7
(22) Date of filing: 05.10.2021
(51) Int. Cl.: H04W 48/18

(54) **NETWORK COMPONENT, METHOD FOR PROVIDING NETWORK CONNECTIVITY, MOBILE TERMINAL AND METHOD FOR PERFORMING RADIO COMMUNICATION**
NETZWERKKOMPONENTE, VERFAHREN ZUR BEREITSTELLUNG VON NETZWERKKONNEKTIVITÄT, MOBILES ENDGERÄT UND VERFAHREN ZUR DURCHFÜHRUNG EINER FUNKKOMMUNIKATION
COMPOSANT DE RÉSEAU, PROCÉDÉ DE FOURNITURE D'UNE CONNECTIVITÉ DE RÉSEAU, TERMINAL MOBILE ET PROCÉDÉ POUR EFFECTUER UNE COMMUNICATION RADIO

(43) Date of publication of application: 12.04.2023
(73) Proprietor: NTT DOCOMO, INC., Chiyoda-Ku Tokyo 100-6150 (JP)
(72) Inventor: SAMA, Malla Reddy, 80687 Munich (DE); MINOKUCHI, Atsushi, Tokyo, 100-6150 (JP); THAKOLSRI, Srisakul, 80687 Munich (DE); THEPOT, Frederic, 80687 Munich (DE)
(74) Representative: Viering, Jentschura & Partner mbB Patent- und Rechtsanwälte

(56) References cited:
- EP-A1- 3 258 717
- WO-A1-2020/247043
- DE-A1- 102017 128 063
- US-B1- 10 623 943

## Description

The present disclosure relates to network components, methods for providing network connectivity, mobile terminals and methods for performing radio communication.

Still, coverage achieved by mobile networks is not at 100%. While this may be simply annoying for users of handheld mobile phones since they may not have Internet access at some locations, it poses a real problem for safety-related services which need network access in order to function properly. An example is autonomous driving, where V2X (vehicle-to-everything) is for example used for detecting other vehicles or other objects in the vicinity of a vehicle. Relevant prior art can be found in documents EP3258717A1, WO2020/247043A1 and US10623943.

Accordingly, approaches to improve connectivity of mobile terminals are desirable.

The invention is set out in the appended claims.

According to one embodiment, a network component is provided including a data collection interface configured to obtain an indication of a list mobile network subscriptions for which a mobile terminal contains subscriber identity modules and, for each of the subscriptions, communication performance information from mobile communication networks associated with the subscriptions. The network component further includes a controller configured to determine control information for controlling communication via at least one of the mobile communication networks associated with the subscriptions based on the communication performance information and a notification interface configured to notify the mobile terminal to perform communication using the at least one of the mobile communication networks according to the control information.

According to further embodiments, a method for providing network connectivity, a mobile terminal and a method for performing radio communication according to the above network component described above are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, e.g. a 5G communication network as specified by 3GPP (Third Generation Partnership Project).
- Figure 2: illustrates an application of a 5G system to a Vehicle-to-Everything (V2X) application.
- Figure 3: illustrates an arrangement with a plurality of PLMNs (public land mobile networks) and a mobile selection system.
- Figure 4: shows a message flow diagram illustrating a message flow according to an embodiment.
- Figure 5: gives examples of input data and output data of a mobile selection system.
- Figure 6: illustrates a roaming scenario.
- Figure 7: shows a network component according to an embodiment.
- Figure 8: shows a flow diagram illustrating a method for providing network connectivity according to an embodiment.
- Figure 9: shows a mobile terminal according to an embodiment.
- Figure 10: shows a flow diagram illustrating a method for performing radio communication according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below: Example 1 is a network component as described above.

Example 2 is the network component of Example 1, wherein the data collection interface is further configured to obtain additional information from a third-party application and the controller is configured to determine the control information further based on the additional information.

Example 3 is the network component of Example 2, wherein the additional information includes coverage information about one or more of the mobile communication networks associated with the subscriptions and/or user densities and/or movement.

Example 4 is the network component of any one of Examples 1 to 3, wherein the controller is configured to select the at least one of the mobile communication networks based on the communication performance information and wherein the control information includes that the at least one of the mobile communication networks should be used for communication.

Example 5 is the network component of any one of Examples 1 to 4, wherein the controller is configured to select an access type or a core network type of the at least one of the mobile communication networks based on the communication performance information and wherein the control information includes that the selected access type or core network type should be used for communication.

Example 6 is the network component of any one of Examples 1 to 5, wherein each subscription is associated with a home mobile communication network of the mobile terminal and wherein the mobile communication networks associated with the subscriptions are the home mobile communication networks.

Example 7 is the network component of any one of Examples 1 to 5, wherein each subscription is associated with a visited mobile communication network of the mobile terminal and wherein the mobile communication networks associated with the subscriptions are the visited mobile communication networks.

Example 8 is the network component of any one of Examples 1 to 5, wherein each subscription is associated with a home mobile communication network and one or more visited mobile communication networks and wherein the data collection interface is configured to obtain, for each subscription, a list of the one or more visited mobile communication networks, wherein the controller is configured to select the at least one of the mobile communication networks from the lists of the one or more visited mobile communication networks and wherein the control information includes that the at least one of the mobile communication networks should be used for communication.

Example 9 is the network component of Example 8, wherein the data collection interface is configured to obtain, for each subscription, the list of the one or more visited mobile communication networks from the home mobile communication network associated with the subscription.

Example 10 is the network component of any one of Examples 1 to 9, wherein the network component implements an artificial intelligence mechanism and/or a machine learning model and the controller is configured to determine the control information using the artificial intelligence mechanism and/or the machine learning model.

Example 11 is the network component of any one of Examples 1 to 10, wherein the machine learning model predicts a future location of the mobile terminal.

Example 12 is the network component of any one of Examples 1 to 11, wherein the mobile terminal is a mobile terminal of a vehicle or drone and the network component implements a vehicle or drone control application.

Example 13 is the network component of Example 12, wherein the network component implements a vehicle-to-everything application.

Example 14 is the network component of any one of Examples 1 to 13, wherein the control information includes access information of the at least one of the mobile communication networks.

Example 15 is the network component of any one of Examples 1 to 14, wherein the controller is configured to select the at least one of the mobile communication network associated with the subscriptions to maximize expected connectivity quality of the mobile terminal in accordance with the communication performance information.

Example 16 is the network component of any one of Examples 1 to 15, wherein the data collection interface is configured to obtained the indication of the list from the mobile terminal and/or information mobile communication network and/or third party application.

Example 17 is the network component according to any one of Examples 1 to 16, wherein the notification interface is configured to notify the mobile terminal to perform communication using the at least one mobile communication network according to the control information via application layer or via control plane signalling.

Example 18 is a method for providing network connectivity including obtaining an indication of a list mobile network subscriptions for which a mobile terminal contains subscriber identity modules, obtaining, for each of the subscriptions, communication performance information from mobile communication networks associated with the subscriptions, determining control information for controlling communication via at least one of the mobile communication networks associated with the subscriptions based on the communication performance information and notifying the mobile terminal to perform communication using the at least one of the mobile communication networks according to the control information.

Example 19 is a mobile terminal including a transmitter configured to transmit an indication of a list mobile network subscriptions for which the mobile terminal contains subscriber identity modules to an network component, a receiver configured to receive control information to perform communication using at least one mobile communication network of mobile communication networks associated with the subscriptions and a communication module configured to perform communication in accordance with the control information.

Example 20 is a method for performing radio communication including transmitting an indication of a list mobile network subscriptions for which the mobile terminal contains subscriber identity modules to an network component, receiving control information to perform communication using at least one mobile communication network of mobile communication networks associated with the subscriptions and performing communication in accordance with the control information.

It should be noted that one or more of the features of any of the examples above may be combined with any one of the other examples. In particular, the Examples described in context of the devices (in particular the network component) are analogously valid for the methods and the Examples described in context of the mobile terminal are analogously valid for the mobile terminal.

According to further embodiments, a computer program and a computer readable medium including instructions, which, when executed by a computer, make the computer perform a method of any one of the above Examples are provided.

In the following, various examples will be described in more detail.

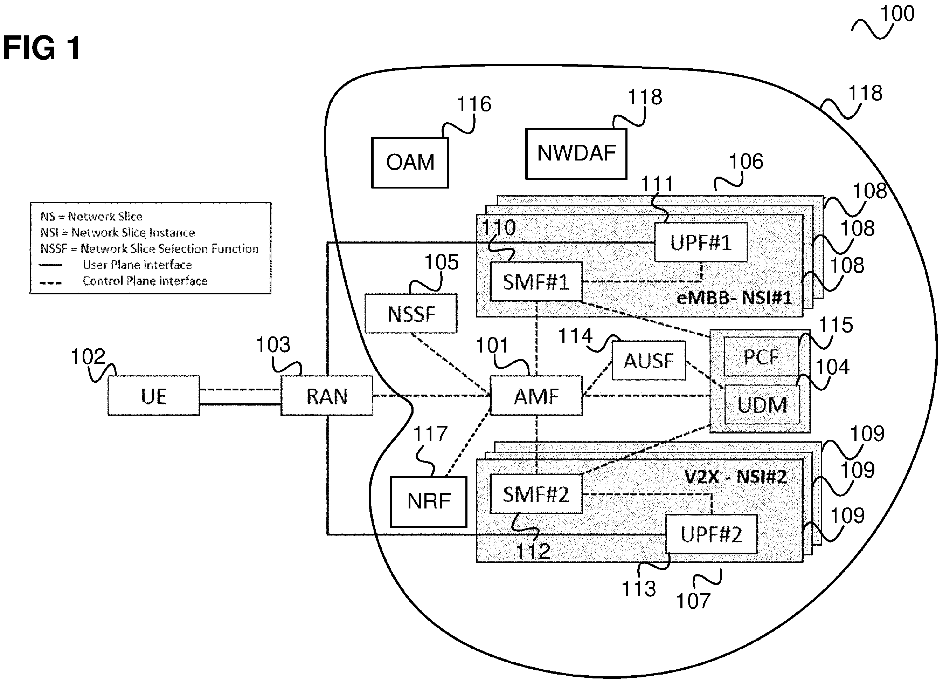

Figure 1 shows a radio communication system 100, e.g. a 5G communication network as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile (radio) communication network (e.g. a Public Land Mobile communication network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another radio communication standard (e.g. Wi-Fi) but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 (which may be paired with a Unified Data Repository (UDR)) and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The core network 118 may further include an NRF (Network Repository Function) 117, which provides network function/network function service registration, network function/network function service discovery. The NRF may have an interface to any network function in the mobile radio communication network side, e.g. have an interface to the AMF 101, the SMFs 110, 112. For simplicity, only the interface between the NRF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

Further, the radio communication system 100 may include a NWDAF (Network Data and Analytics Function) 118.

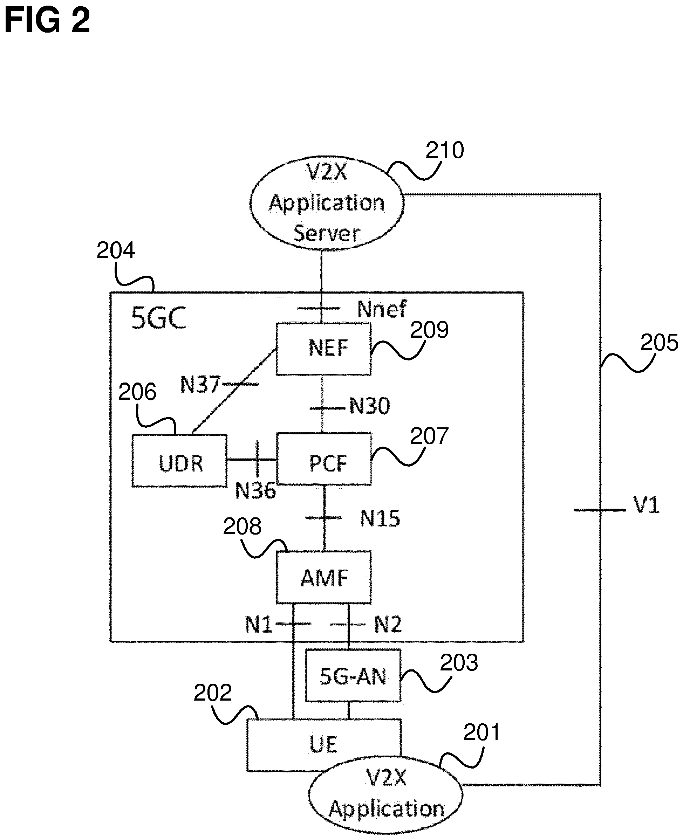

As explained above, a 5GS (5G system) may for example provide communication for Vehicle-to-Everything (V2X). This means that, for example, an V2X application running on the UE 102 communicates via the network side of the 5G system with a V2X application server as illustrated in figure 2.

Figure 2 illustrates an application of a 5G system to a Vehicle-to-Everything (V2X) application.

A V2X application 201 is running on a UE 202 (e.g. corresponding to UE 102). A 5G system including an 5G access network 203 (e.g. corresponding to RAN 103) and a 5G core network (5GC) 204 (e.g. corresponding to core network 118) provide an interface 205 between the V2X application 201 and a V2X application server 210.

As explained with reference to figure 1, the 5G core network 204 includes a UDR 206, a PCF 207 and an AMF 208. Additionally, it provides a Network Exposure Function (NEF) 209. The 5GS provides NEF services to enable communication between NFs in the PLMN (to which 5GC 204 and 5G-AN 203 belong) and the V2X application server including the (V1) interface (or reference point) between the UE 201 and the V2X Application Server 210. The V2X Application Server address information may be configured on the UE 202 or provisioned over the N1 interface between the AMF 208 and the UE 202.

However, due to poor radio coverage, relying on a single operator (i.e. a single PLMN) is typically not desirable for a vehicle company with regard to car connectivity especially for remote and autonomous driving.

Therefore, according to various embodiments, it is assumed that a vehicle company has an SLA (service level agreement) with multiple PLMN operators at a location (e.g. in a country).

According to various embodiments, it is further assumed that the vehicle company operates a mobile selection system, e.g. an AI (artificial intelligence) system trained for mobile network selection, for example in a private cloud of the vehicle company, (e.g., in company's premises).

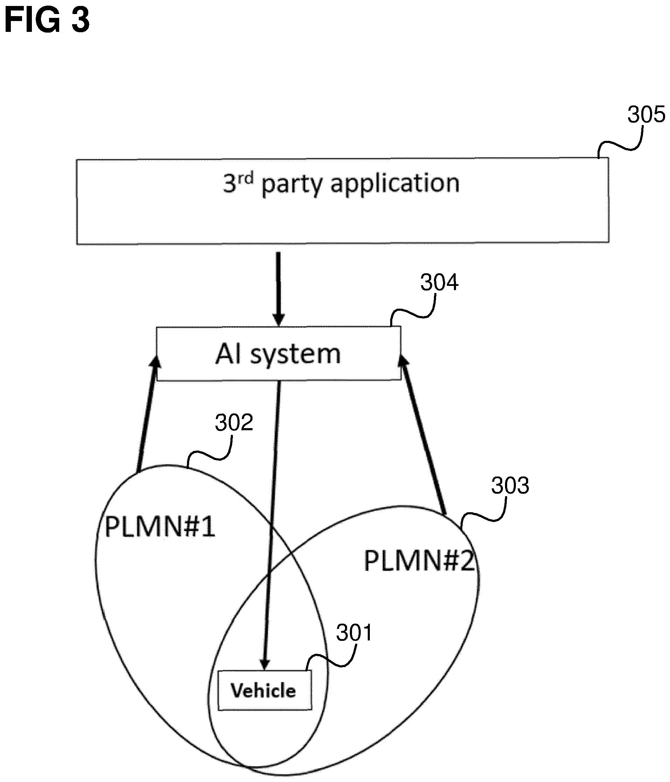

Figure 3 illustrates such a scenario.

A vehicle 301 is in the coverage of two (or more) PLMNs 302, 303. The vehicle 301 has a subscription and contains a subscriber identity module (for the subscription) for each of the PLMNs 302, 303, i.e. each PLMN 302, 303 is a home network of the vehicle 301. For example, the vehicle 301 includes the UE 202 and the UE 202 is equipped with subscriber identity modules for the PLMNs 302, 303. It should be noted that both USIMs as well as SIMs , for example, are regarded as subscriber identity modules, i.e. as hardware (e.g. card) and software (application) allowing mobile network access. A subscriber identity module is associated with a subscription (and is typically provided by an operator of a mobile network to which the vehicle 301 is subscribed). The vehicle 301 thus has multiple subscriptions and contains a subscriber identity module for each subscription.

The V2X application 201 is for example configured to handle a change of connection between PLMNs. According to various embodiments, the V2X application 201 does this according to control information provided by a mobile selection system 304 operated by the vehicle company which has manufactured the vehicle 301. The mobile selection system for example implements a machine learning model and performs selection (PLMN selection and/or RAT (radio access technology) selection and/or CN (core network) selection) using results of the machine learning model. It is therefore denoted as AI (artificial intelligence) system in the following but embodiments do not necessarily have to use machine learning. Further, the selection may not necessarily be among (e.g. only) PLMNs, private networks may for example also be considered in the selection.

An exemplary use case of the scenario of figure 3 is that for remote and autonomous driving the vehicle 301 needs to know whether it continues to attach to a current serving PLMN or should move to another PLMN in order to continue smooth driving. For example, it may be desirable to change to another PLMN because network conditions of an ongoing communication session provided by the current serving PLMN become unstable due to a patchy coverage area or congestions in the network.

According to various embodiments, the AI system 304 collects the data including, for example:
- from the PLMNs 302, 303: network congestion and load information, signal strength, resources to serve the vehicle 301, etc.
- from a third-party application 305 coverage information, traffic conditions, etc.
- prediction results (e.g. output by (e.g. AI) prediction algorithms executed by the AI system 304), for example predicting where the vehicle 301 is moving. The AI system 304 may then consider the network load in the location to which the vehicle 301 is expected to be moving when selecting a PLMN.

The AI system 304 provides control information to the vehicle 301 in a corresponding notification. In accordance with the control information, the vehicle 301 determines whether to move to another PLMN or continues using the current serving PLMN.

Another exemplary use case is that instead of two PLMNs 302, 303, there is one PLMN and a local network in a parking deck (denoted as parking network).

The parking network can be a 3GPP network or non-3GPP network. Accordingly, the approaches described herein are not limited to 3GPP networks.

In this use case, basic connectivity services should be provided for vehicles parked in (or which will drive into) an area of bad coverage (e.g., car sharing vehicle in an underground garage). These services include vehicle control such as start of vehicle heating, update of battery status, vehicle lock/unlock, basic vehicle status updates to the backend, etc. The AI system 304 may also assist a vehicle 301 to park based on information received from the parking network.

The AI system 304 provides the parking network details to the vehicle 301 so that the vehicle 301 can attach to the parking network to have connectivity in the bad coverage area.

Thus, the AI system 304, according to various embodiments, provides multiple network information-based vehicle driving assistance (or generally network selection assistance) by collecting input data per network (e.g. PLMN), possibly also input from a third-party application and, based on the input, determines the serving network's state and assists the vehicle i.e. tells the vehicle whether to continue the connection or move another PLMN.

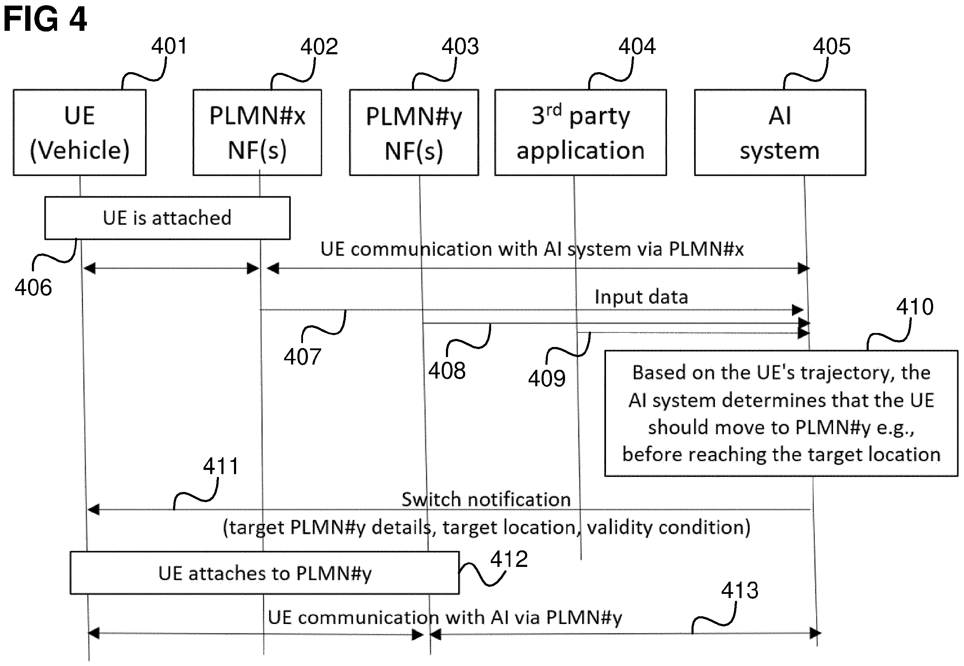

Figure 4 shows a message flow diagram 400 illustrating a message flow according to an embodiment.

A UE 401, e.g. installed or implemented by vehicle 301, a first PLMN 402, e.g. corresponding to PLMN 302, a second PLMN 403, e.g. corresponding to PLMN 303, a third-party application 404, e.g. corresponding to third party application 305 and an AI system 405, e.g. corresponding to AI system 304 are involved in the flow.

It is assumed that in the beginning, in 406, the UE 401 is attached to the first PLMN 402 and uses the first PLMN 402 for communication, e.g. with a V2X application server 210. Further, the UE 401 has a connection (e.g. a session) to the AI system 405 via the first PLMN 402. The UE 401 provides information to the AI system 405 such as the subscriber identity module details, attached PLMN (i.e. current serving PLMN) and location information.

In 407, a network function (NF) of the first PLMN 402 (e.g. an NWDAF (via a NEF) or an OAM) exposes data about the first PLMN 402 to the AI system 405 (e.g. information about its load or generally communication performance information, i.e. information regarding the communication performance the network (here first PLMN 402) can provide, e.g. in a certain region).

Similarly, in 408, a network function (NF) of the second PLMN 403 exposes data about the second PLMN 403 to the AI system 405.

The AI system 405 may for example subscribe to be notified about network data with both PLMNs 402, 403.

The network data serves as input data for the AI system 405.

In 409, the AI system 405 may be provided with additional data (forming part of its input data) from the third-party application 404.

In 410, based on its input data, the AI system 405 predicts, in the present example, that the UE 401 needs to switch to the second PLMN 403 for a smooth connection (e.g. to avoid interruption of a connection to V2X application server 210.

Accordingly, in 411, the AI system 405 provides a notification with a policy (or instruction or recommendation) to switch PLMN and how to switch PLMN to the UE 401 and includes information about the target PLMN (e.g. a PLMN identification) and possibly execution conditions, e.g. to switch before reaching target location, validity of the policy, etc.

The AI system 405 may provide multiple candidate target PLMNs and execution conditions.

In 412, the UE 401 executes a PLMN change according to the policy, i.e. switches to the PLMN(s) indicated by AI system 405 in 411 according to the execution condition(s) (if any). In this example, the UE 401 switches to the second PLMN 403.

For example, an execution condition can be to switch before reaching a certain location (e.g. tracking area) and/or immediately switch and/or switch if radio signal became poor in terms of a certain level or threshold, etc.

In 413, the UE 401 communicates using the second PLMN 403 (e.g. with the V2X application server) and has a connection (e.g. a session) to the AI system 405 via the second PLMN 403.

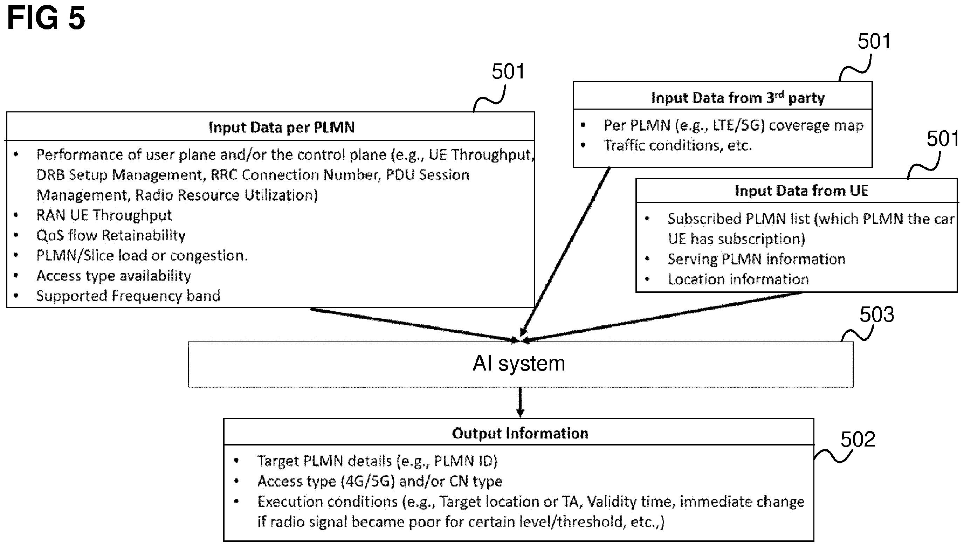

Figure 5 gives examples of input data 501 and output data 502 (i.e. data it may provide to the UE 301) of an AI system 503 (corresponding to AI system 304).

As mentioned above, it is assumed the PLMNs 302, 303 are Home PLMNs for the UE 301.

For a roaming scenario in case that the vehicle 301 is not in the coverage area of the PLMNs 302, 303 (but is for example in another country), it is now assumed that, for each PLMN 302, 303, both the operator of the PLMN and the vehicle company have an agreement with (at least one) operator of (at least one) further PLMN, e.g. in a different country.

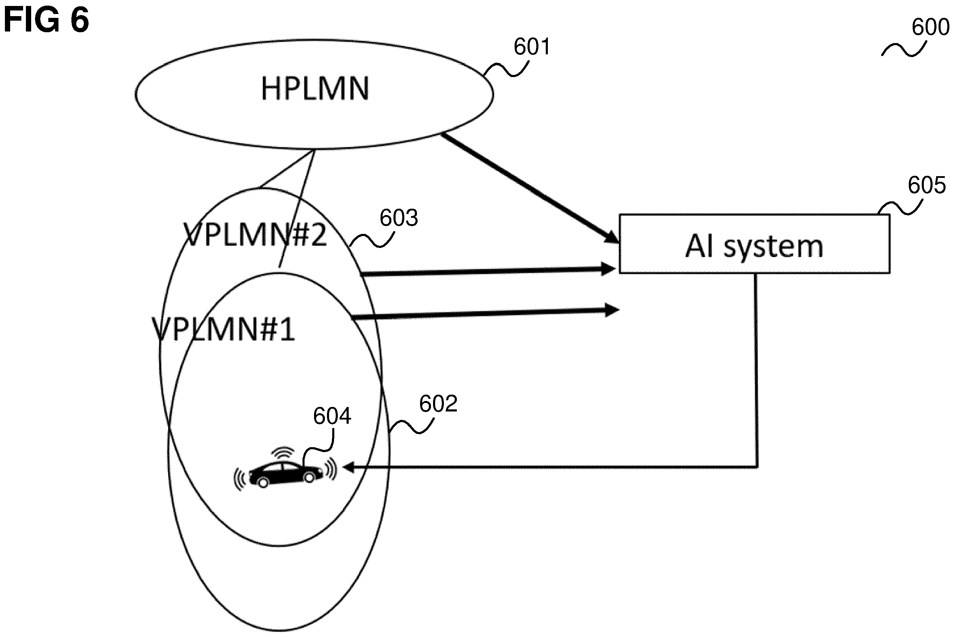

Figure 6 illustrates a roaming scenario 600.

The operator of a HPLMN 601 (e.g. corresponding to one of PLMNs 302, 303) has a (roaming) agreement with the operator of a first VPLMN (visited PLMN) 602 and with the operator of a second VPLMN 603.

A vehicle 604 is assumed to be outside of the coverage of the HPLMN 601 but within the coverage of one of both of the VPLMNs 602, 603. As in the embodiments described above an AI system 605 is provided.

In such a scenario, the HPLMN 601 provides a list of the VPLMNs 602, 603 (i.e. a list of PLMNs that may serve as VPLMNs for the HPLMN 601 due to a corresponding agreement) to the AI system 605.

The AI system 605 checks the overlap between the list of the VPLMNs 602, 603 and a list of PLMNs with which the vehicle company has an agreement.

In the present example, it is assumed that both the operator of the HPLMN 601 and the vehicle company have a collaboration with both VPLMNs 602, 603.

The vehicle 604 (i.e. the vehicle's UE) may for example provide details the HPLMN 601 to the AI system 605, e.g. which is its HPLMN 601. It may also provide details about its current serving PLMN (which may be a further VPLMN without roaming agreement so that a PLMN change may be desirable).

Similarly to the embodiments described above, the AI system 605 collects data from the VPLMNs 602, 603 and provides assistance to the vehicle 604 either to move to another VPLMN or another RAT, etc.

Thus, an V2X Application Server with AI embedded, for example, may consider a roaming agreement between different H-PLMNs and different V-PLMNs when providing an AI input to the vehicle's UE. For example, when the UE is in a roaming situation and attached to a V-PLMN and there are one or more other V-PLMNs providing coverage and a connectivity service for the UE, the AI system in the V2X application server may consider what roaming agreement the UE's HPLMN has with the V-PLMN and the further V-PLMNs.

In the above embodiments, the AI system has sent control or assistance information (e.g. a policy) to the UE to instruct (or recommend) that the UE changes PLMN.

However, the AI system may also provide such an input to the UE to move only a certain session (e.g. PDU (Protocol Data Unit) session) to different PLMN.

For example, if the AI system determines that a QoS (quality of service) for a first session cannot be guaranteed by the current serving PLMN (e.g. due to load or congestion), the AI system can inform the UE to move this session to a different PLMN to get the QoS. In this case, some sessions may be provided served by a first PLMN while other sessions may be provided by a second PLMN i.e. the UE is attached to two different PLMNs and maintains the sessions.

It should be noted that while the above embodiments are described in a vehicle use case, i.e. in case the UE is part of a vehicle, the approaches described above may also be applied to other use cases, in particular the case that the UE is part of a drone. The drone may then receive similar instructions or proposals from a drone server (implementing the AI system) as the vehicle above.

So, in general a mobile terminal may be part of any device to provide mobile communication for the device (like a vehicle or drone). It may also be a standalone device (like a smartphone). It may be UE according to 3GPP.

Additionally, it should be noted that the AI system can provide the information (e.g., notification about instruction or proposal for mobile selection) to the UE via the application layer (directly) or via the control plane of the 5G communication network (indirectly). For example, in the latter case, the AI system sends the notification to the UE in a dedicated container which is passed by the communication network to the UE over the control plane (e.g.: AI system → NEF → AMF → UE).

The network component may be part of one of the mobile communication networks or may be independent from the mobile communication networks.

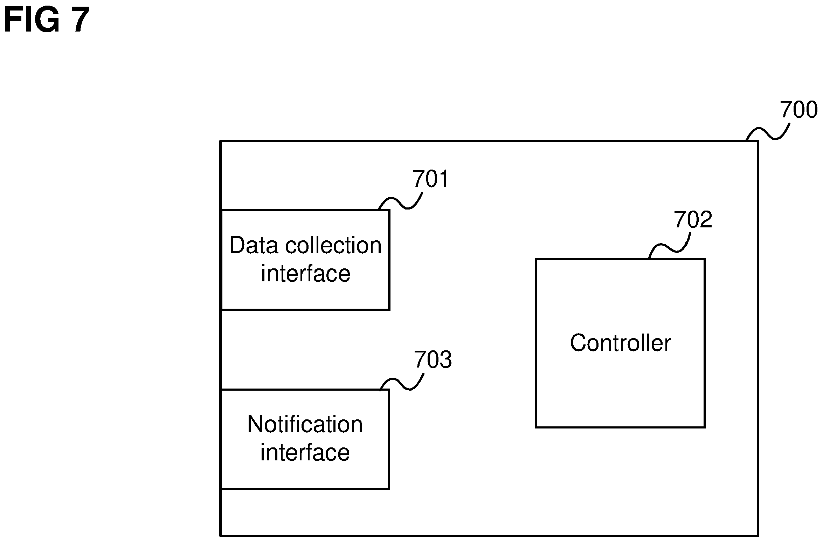

In summary, according to various embodiments, a network component is provided as illustrated in figure 7.

Figure 7 shows a network component 700 according to an embodiment.

The network component 700 includes a data collection interface 701 configured to obtain an indication of a list mobile network subscriptions for which a mobile terminal contains subscriber identity modules and, for each of the subscriptions, communication performance information from mobile communication networks associated with the subscriptions.

The network component 700 further includes a controller 702 configured to determine control information for controlling communication via at least one of the mobile communication networks associated with the subscriptions based on the communication performance information and a notification interface 703 configured to notify the mobile terminal to perform communication using the at least one of the mobile communication networks according to the control information.

The network component (or communication network component) is for example an application layer component, i.e. a component of the application layer of the respective communication system e.g., V2X application server.

According to various embodiments, in other words, to achieve better coverage, a mobile terminal has multiple mobile network subscriptions and informs a network component about mobile network subscriptions it has. The network component collects data from mobile networks associated with these subscriptions (which may be HPLMNs corresponding to the subscriptions or, e.g. if the mobile terminal is not in the coverage area of the HPLMNs, e.g. in other country, VPLMNs with which the operators of the HPLMNs (i.e. the operators with which the mobile terminal has the subscriptions) have roaming agreements. The network component determines control information for controlling communication via one or more of these mobile networks associated with the subscriptions and notifies the mobile terminal about the control information (i.e. transmits a notification including the control information to the mobile terminal). This may for example include that the network component selects one or more of the mobile networks associated with the subscriptions, and instructs or suggests that the mobile terminal uses the selected mobile network for communication (e.g. for communication with the network component itself, e.g. for vehicle control in case the mobile terminal is a mobile terminal installed in a vehicle). According to various embodiments, the network component is a component operated by a further operator, i.e. a different operator than the operators with which the mobile terminal has a subscription.

By having multiple subscriptions and choosing among mobile networks associated with these subscriptions (e.g. choosing the one for which best communication performance can currently be expected) overall connectivity for the mobile terminal is improved. This is in particular relevant for safety-related applications like communication for autonomous driving.

For example, the network component implements a machine learning model and can thus be, as in the embodiments described above, regarded as an AI system. It should however be noted that it may also be provided without the usage of machine learning.

The AI system for example has an internal logic which determines to decides to continue connectivity for a UE with the current serving PLMN of the UE or to inform the UE to switch to another PLMN. For this decision, it may collect data multiple PLMNs and possibly also a third-party application. It instructs the UE to move to a different PLMN and/or access type and/or CN type of the current or another PLMN. Along with the instruction, it may provide necessary parameters (e.g. target PLMN ID(s)) to the UE. The AI system may receive necessary information from the UE e.g., the UE can provide a list of PLMNs to which it is subscribed and information about its current serving PLMN.

Examples of communication performance information are as given in figure 5, e.g. achievable quality of service, throughput etc.

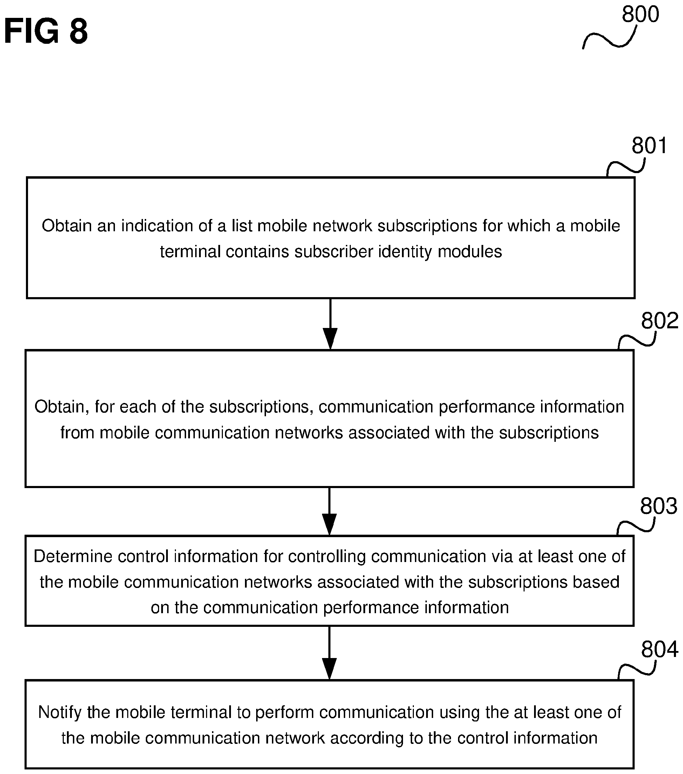

The network component for example carries out a method as illustrated in figure 8.

Figure 8 shows a flow diagram illustrating a method for providing network connectivity according to an embodiment.

In 801, an indication of a list mobile network subscriptions for which a mobile terminal contains subscriber identity modules is obtained.

In 802, for each of the subscriptions, communication performance information from mobile communication networks associated with the subscriptions is obtained.

In 803, control information for controlling communication via at least one of the mobile communication networks associated with the subscriptions is determined based on the communication performance information.

In 804, the mobile terminal is notified to perform communication using the at least one of the mobile communication networks according to the control information.

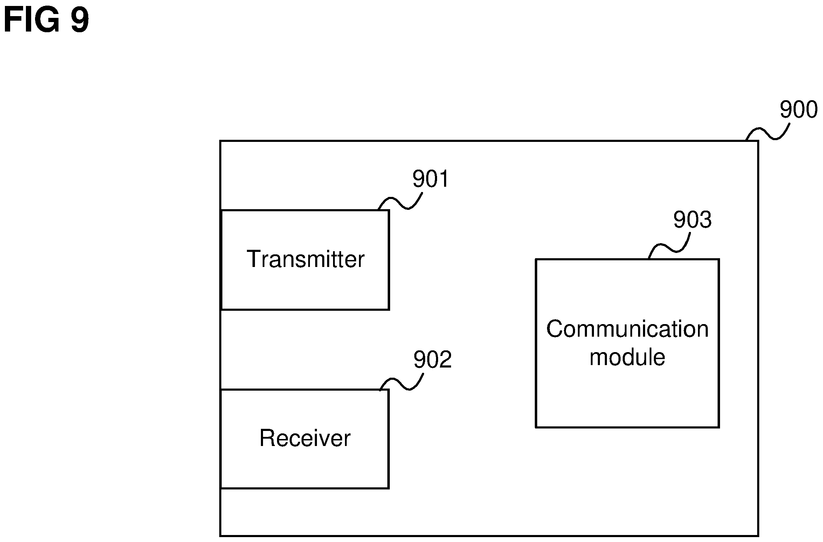

Figure 9 shows a mobile terminal 900 according to an embodiment.

The mobile terminal 900 includes a transmitter 901 configured to transmit an indication of a list mobile network subscriptions for which the mobile terminal contains subscriber identity modules to a network component and a receiver 902 configured to receive control information to perform communication using at least one mobile communication network of mobile communication networks associated with the subscriptions.

The mobile terminal 900 further includes a communication module 903 configured to perform communication in accordance with the control information.

For example, the mobile terminal may transmit the indication of the list via a current serving network and may then switch network (or RAT or CN) according to the control information. The mobile terminal may do this per session, i.e. it may have a plurality of sessions and perform communication for one or more of the sessions via at least one mobile communication network (or RAT or CN) specified in the control information (and communication for others of the sessions via another mobile communication network (or RAT or CN), e.g. have them remain on the serving network).

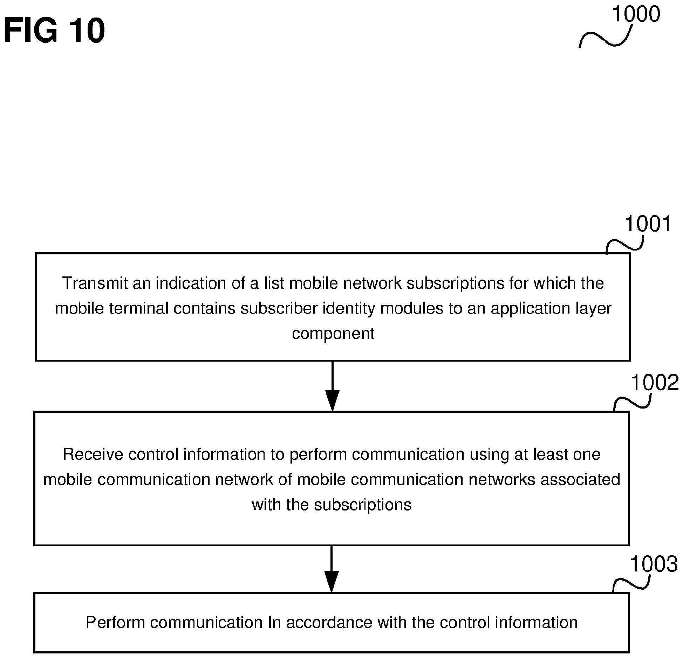

Figure 10 shows a flow diagram illustrating a method for performing radio communication according to an embodiment. According to one embodiment, the method is carried out by a mobile terminal.

In 1001, an indication of a list mobile network subscriptions for which the mobile terminal contains subscriber identity modules to a network component is transmitted.

In 1002, control information to perform communication using at least one mobile communication network of mobile communication networks associated with the subscriptionsis received.

In 1003, communication is performed in accordance with the control information.

The components of the network component and the mobile terminal (e.g. the controller, the interfaces etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of the aspects of this disclosure as defined by the appended claims. The scope is thus indicated by the appended claims and all changes which come within the scope of the claims are therefore intended to be embraced.

## Claims

1. A network component (700) comprising:
a data collection interface (701) configured to obtain
an indication of a list mobile network subscriptions for which a mobile terminal (102, 301, 401, 604, 900) contains subscriber identity modules; and
for each of the subscriptions, communication performance information from mobile communication networks (302, 303, 602, 603) associated with the subscriptions;
a controller (702) configured to determine control information for controlling communication via at least one of the mobile communication networks (118, 204, 302, 302, 402, 403, 602, 603) associated with the subscriptions based on the communication performance information at a location to which the mobile terminal (102, 301, 401, 604, 900) is expected to be moving when selecting a mobile communication network; and
a notification interface (703) configured to notify the mobile terminal (102, 301, 401, 604, 900) to perform communication using the at least one of the mobile communication networks (302, 303, 602, 603) according to the control information.

2. The network component (700) of claim 1, wherein the data collection interface (701) is further configured to obtain additional information from a third-party application (305, 404) and the controller (702) is configured to determine the control information further based on the additional information.

3. The network component (700) of claim 2, wherein the additional information comprises coverage information about one or more of the mobile communication networks (302, 303, 602, 603) associated with the subscriptions and/or user densities and/or movement.

4. The network component (700) of any one of claims 1 to 3, wherein the controller (702) is configured to select the at least one of the mobile communication networks (302, 303, 602, 603) based on the communication performance information and wherein the control information includes that the at least one of the mobile communication networks (302, 303, 602, 603) should be used for communication.

5. The network component (700) of any one of claims 1 to 4, wherein the controller (702) is configured to select an access type or a core network type of the at least one of the mobile communication networks (302, 303, 602, 603) based on the communication performance information and wherein the control information includes that the selected access type or core network type should be used for communication.

6. The network component (700) of any one of claims 1 to 5, wherein each subscription is associated with a home mobile communication network of the mobile terminal (102, 301, 401, 604, 900) and wherein the mobile communication networks (302, 303, 602, 603) associated with the subscriptions are the home mobile communication networks (302, 303, 602, 603).

7. The network component (700) of any one of claims 1 to 5, wherein each subscription is associated with a visited mobile communication network of the mobile terminal (102, 301, 401, 604, 900) and wherein the mobile communication networks (302, 303, 602, 603) associated with the subscriptions are the visited mobile communication networks (302, 303, 602, 603).

8. The network component (700) of any one of claims 1 to 5, wherein each subscription is associated with a home mobile communication network and one or more visited mobile communication networks (302, 303, 602, 603) and wherein the data collection interface (701) is configured to obtain, for each subscription, a list of the one or more visited mobile communication networks (302, 303, 602, 603), wherein the controller (702) is configured to select the at least one of the mobile communication networks (302, 303, 602, 603) from the lists of the one or more visited mobile communication networks (302, 303, 602, 603) and wherein the control information includes that the at least one of the mobile communication networks (302, 303, 602, 603) should be used for communication.

9. The network component (700) of claim 8, wherein the data collection interface (701) is configured to obtain, for each subscription, the list of the one or more visited mobile communication networks (302, 303, 602, 603) from the home mobile communication network associated with the subscription.

10. The network component (700) of any one of claims 1 to 9, wherein the network component (304, 405, 503, 605) implements an artificial intelligence mechanism and/or a machine learning model and the controller (702) is configured to determine the control information using the artificial intelligence mechanism and/or the machine learning model.

11. The network component (700) of any one of claims 1 to 10, wherein the data collection interface (701) is configured to obtained the indication of the list from the mobile terminal (102, 301, 401, 604, 900) and/or information mobile communication network and/or third party application (305, 404).

12. The network component (700) according to any one of claims 1 to 11, wherein the notification interface is configured to notify the mobile terminal (102, 301, 401, 604, 900) to perform communication using the at least one mobile communication network according to the control information via application layer or via control plane signalling.

13. A method (800), performed by a network component (700), for providing network connectivity comprising:
obtaining (801) an indication of a list mobile network subscriptions for which a mobile terminal (102, 301, 401, 604, 900) contains subscriber identity modules;
obtaining, (802) for each of the subscriptions, communication performance information from mobile communication networks (302, 303, 602, 603) associated with the subscriptions;
determining (803) control information for controlling communication via at least one of the mobile communication networks (302, 303, 602, 603) associated with the subscriptions based on the communication performance information at a location to which the mobile terminal (301) is expected to be moving when selecting a mobile communication network; and
notifying (804) the mobile terminal (102, 301, 401, 604, 900) to perform communication using the at least one of the mobile communication networks (302, 303, 602, 603) according to the control information.

14. A mobile terminal (900), comprising:
a transmitter (901) configured to transmit an indication of a list mobile network subscriptions for which the mobile terminal (102, 301, 401, 604, 900) contains subscriber identity modules to a network component;
a receiver (902) configured to receive control information to perform, at a location to which the mobile terminal (900) is expected to be moving to, communication using at least one mobile communication network (118) of mobile communication networks (118, 302, 303, 602, 603) associated with the subscriptions; and
a communication module (903) configured to perform communication in accordance with the control information.

15. A method (1000), performed by a mobile terminal (900), for performing radio communication comprising:
transmitting (1001) an indication of a list mobile network subscriptions for which the mobile terminal (102, 301, 401, 604, 900) contains subscriber identity modules to a network component;
receiving (1002) control information to perform, at a location to which the mobile terminal (900) is expected to be moving, communication using at least one mobile communication network of mobile communication networks (302, 303, 602, 603) associated with the subscriptions; and
performing (1003) communication in accordance with the control information.

## Patentansprüche

1. Eine Netzwerkkomponente (700), umfassend:
eine Datenerfassungsschnittstelle (701), die eingerichtet ist,
eine Angabe einer Liste von Mobilnetzwerksubskriptionen, für die ein Mobilendgerät (102, 301, 401, 604, 900) Teilnehmeridentitätsmodule enthält, und
für jede der Subskriptionen, Kommunikationsleistungsinformation von Mobilkommunikationsnetzwerken (302, 303, 602, 603), die mit den Subskriptionen assoziiert sind, zu erhalten;
eine Steuerung (702), die eingerichtet ist, Steuerungsinformation zum Steuern von Kommunikation über mindestens eines der Mobilkommunikationsnetzwerke (118, 204, 302, 302, 402, 403, 602, 603), die mit den Subskriptionen assoziiert sind, basierend auf der Kommunikationsleistungsinformation an einem Ort, zu dem sich das Mobilendgerät (102, 301, 401, 604, 900) erwartungsgemäß bewegen wird, wenn es ein Mobilkommunikationsnetzwerk auswählt, zu ermitteln; und
eine Benachrichtigungsschnittstelle (703), die eingerichtet ist, das Mobilendgerät (102, 301, 401, 604, 900) zu benachrichtigen, um Kommunikation unter Verwendung des mindestens einen der Mobilkommunikationsnetzwerke (302, 303, 602, 603) gemäß der Steuerungsinformation durchzuführen.

2. Die Netzwerkkomponente (700) gemäß Anspruch 1, wobei die Datenerfassungsschnittstelle (701) weiter eingerichtet ist, zusätzliche Information von einer Drittanbieteranwendung (305, 404) zu erhalten, und die Steuerung (702) eingerichtet ist, die Steuerungsinformation weiter basierend auf der zusätzlichen Information zu ermitteln.

3. Die Netzkomponente (700) gemäß Anspruch 2, wobei die zusätzliche Information Abdeckungsinformation über eines oder mehrere der Mobilkommunikationsnetzwerke (302, 303, 602, 603) umfasst, die mit den Subskriptionen und/oder Benutzerdichten und/oder der Bewegung assoziiert ist.

4. Die Netzwerkkomponente (700) gemäß einem der Ansprüche 1 bis 3, wobei die Steuerung (702) eingerichtet ist, das mindestens eine der mobilen Kommunikationsnetzwerke (302, 303, 602, 603) basierend auf der Kommunikationsleistungsinformation auszuwählen, und wobei die Steuerungsinformation beinhaltet, dass das mindestens eine der Mobilkommunikationsnetzwerke (302, 303, 602, 603) für die Kommunikation verwendet werden sollte.

5. Die Netzwerkkomponente (700) gemäß einem der Ansprüche 1 bis 4, wobei die Steuerung (702) eingerichtet ist, einen Zugangstyp oder einen Kernnetzwerktyp des mindestens einen der Mobilkommunikationsnetzwerke (302, 303, 602, 603) basierend auf der Kommunikationsleistungsinformation auszuwählen, und wobei die Steuerungsinformation beinhaltet, dass der ausgewählte Zugangstyp oder Kernnetzwerktyp für die Kommunikation verwendet werden sollte.

6. Die Netzwerkkomponente (700) gemäß einem der Ansprüche 1 bis 5, wobei jede Subskription mit einem Heim-Mobilkommunikationsnetzwerk des Mobilendgeräts (102, 301, 401, 604, 900) assoziiert ist und wobei die mit den Subskriptionen assoziierten Mobilkommunikationsnetzwerke (302, 303, 602, 603) die Heim-Mobilkommunikationsnetzwerke (302, 303, 602, 603) sind.

7. Die Netzkomponente (700) gemäß einem der Ansprüche 1 bis 5, wobei jede Subskription mit einem besuchten Mobilkommunikationsnetzwerk des Mobilendgeräts (102, 301, 401, 604, 900) assoziiert ist und wobei die mit den Subskriptionen assoziierten Mobilkommunikationsnetzwerke (302, 303, 602, 603) die besuchten Mobilkommunikationsnetzwerke (302, 303, 602, 603) sind.

8. Die Netzwerkkomponente (700) gemäß einem der Ansprüche 1 bis 5, wobei jede Subskription mit einem Heim-Mobilkommunikationsnetzwerk und einem oder mehreren besuchten Mobilkommunikationsnetzwerken (302, 303, 602, 603) assoziiert ist und wobei die Datenerfassungsschnittstelle (701) eingerichtet ist, für jede Subskription eine Liste des einen oder der mehreren besuchten Mobilkommunikationsnetzwerke (302, 303, 602, 603) zu erhalten, wobei die Steuerung (702) eingerichtet ist, das mindestens eine der mobilen Kommunikationsnetzwerke (302, 303, 602, 603) aus den Listen der einen oder mehreren besuchten Mobilkommunikationsnetzwerke (302, 303, 602, 603) auszuwählen, und wobei die Steuerungsinformation beinhaltet, dass das mindestens eine der Mobilkommunikationsnetzwerke (302, 303, 602, 603) für die Kommunikation verwendet werden sollte.

9. Die Netzwerkkomponente (700) gemäß Anspruch 8, wobei die Datenerfassungsschnittstelle (701) eingerichtet ist, für jede Subskription die Liste des einen oder der mehreren besuchten Mobilkommunikationsnetzwerke (302, 303, 602, 603) von dem mit der Subskription assoziierten Heim-Mobilkommunikationsnetzwerk zu erhalten.

10. Die Netzwerkkomponente (700) gemäß einem der Ansprüche 1 bis 9, wobei die Netzwerkkomponente (304, 405, 503, 605) einen Künstliche-Intelligenz-Mechanismus und/oder ein maschinelles Lernmodell implementiert und die Steuerung (702) eingerichtet ist, die Steuerungsinformation unter Verwendung des Künstliche-Intelligenz-Mechanismus und/oder des maschinellen Lernmodells zu ermitteln.

11. Die Netzwerkkomponente (700) gemäß einem der Ansprüche 1 bis 10, wobei die Datenerfassungsschnittstelle (701) eingerichtet ist, die Angabe der Liste von dem Mobilendgerät (102, 301, 401, 604, 900) und/oder dem Informationsmobilkommunikationsnetzwerk und/oder der Drittanbieteranwendung (305, 404) zu erhalten.

12. Die Netzwerkkomponente (700) gemäß einem der Ansprüche 1 bis 11, wobei die Benachrichtigungsschnittstelle eingerichtet ist, das Mobilendgerät (102, 301, 401, 604, 900) zu benachrichtigen, um Kommunikation unter Verwendung des mindestens einen Mobilkommunikationsnetzwerkes gemäß der Steuerungsinformation über die Anwendungsschicht oder über die Steuerungsebenen-Signalisierung durchzuführen.

13. Ein Verfahren (800), durchgeführt von einer Netzwerkkomponente (700), zum Bereitstellen von Netzwerkkonnektivität, umfassend:
Erhalten (801) einer Angabe einer Liste von Mobilnetzwerksubskriptionen, für die ein Mobilendgerät (102, 301, 401, 604, 900) Teilnehmeridentitätsmodule enthält;
Beschaffen (802), für jede der Subskriptionen, von Kommunikationsleistungsinformation von Mobilkommunikationsnetzwerken (302, 303, 602, 603), die mit den Subskriptionen assoziiert sind;
Ermitteln (803) von Steuerungsinformation zum Steuern der Kommunikation über mindestens eines der Mobilkommunikationsnetzwerke (302, 303, 602, 603), die mit den Subskriptionen assoziiert sind, basierend auf der Kommunikationsleistungsinformation an einem Ort, zu dem sich das Mobilendgerät (301) erwartungsgemäß bewegen wird, wenn es ein Mobilkommunikationsnetzwerk auswählt; und
Benachrichtigen (804) des Mobilendgeräts (102, 301, 401, 604, 900), um Kommunikation unter Verwendung des mindestens einen der Mobilkommunikationsnetzwerke (302, 303, 602, 603) gemäß der Steuerungsinformation durchzuführen.

14. Ein Mobilendgerät (900), umfassend:
einen Sender (901), der eingerichtet ist, eine Angabe einer Liste von Mobilnetzwerksubskriptionen, für die das Mobilendgerät (102, 301, 401, 604, 900) Teilnehmeridentitätsmodule enthält, an eine Netzwerkkomponente zu übertragen;
einen Empfänger (902), der eingerichtet ist, Steuerungsinformation zu empfangen, um an einem Ort, zu dem sich das Mobilendgerät (900) erwartungsgemäß bewegen wird, Kommunikation unter Verwendung mindestens eines Mobilkommunikationsnetzwerkes (118) von Mobilkommunikationsnetzwerken (118, 302, 303, 602, 603), die mit den Subskriptionen assoziiert sind, durchzuführen; und
ein Kommunikationsmodul (903), das eingerichtet ist, Kommunikation gemäß der Steuerungsinformation durchzuführen.

15. Ein Verfahren (1000), das von einem Mobilendgerät (900) durchgeführt wird, zum Durchführen einer Funkkommunikation, umfassend:
Übertragen (1001) einer Angabe einer Liste von Mobilnetzwerksubskriptionen, für die das Mobilendgerät (102, 301, 401, 604, 900) Teilnehmeridentitätsmodule enthält, an eine Netzwerkkomponente;
Empfangen (1002) von Steuerungsinformation, um an einem Ort, zu dem sich das Mobilendgerät (900) erwartungsgemäß bewegen wird, Kommunikation unter Verwendung mindestens eines Mobilkommunikationsnetzwerkes von Mobilkommunikationsnetzwerken (302, 303, 602, 603), die mit den Subskriptionen assoziiert sind, durchzuführen; und
Durchführen (1003) der Kommunikation gemäß der Steuerungsinformation.

## Revendications

1. Composant de réseau (700), comprenant :
une interface de collecte de données (701) configurée pour obtenir
une indication d'une liste d'abonnements au réseau mobile pour lesquels un terminal mobile (102, 301, 401, 604, 900) contient des modules d'identité d'abonné ; et
pour chacun des abonnements, des informations de performance de communication de réseaux de communication mobile (302, 303, 602, 603) associés aux abonnements ;
un contrôleur (702) configuré pour déterminer des informations de commande de communication pour commander une communication via au moins un des réseaux de communication mobile (118, 204, 302, 302, 402, 403, 602, 603) associés aux abonnements sur la base des informations de performance de communication à un emplacement vers lequel le terminal mobile (102, 301, 401, 604, 900) est censé se déplacer lors de la sélection d'un réseau de communication mobile ; et
une interface de notification (703) configurée pour notifier au terminal mobile (102, 301, 401, 604, 900) d'effectuer une communication en utilisant ledit au moins un des réseaux de communication mobile (302, 303, 602, 603) conformément aux informations de commande.

2. Composant de réseau (700) selon la revendication 1, dans lequel l'interface de collecte de données (701) est en outre configurée pour obtenir des informations supplémentaires à partir d'une application tierce (305, 404) et le contrôleur (702) est configuré pour déterminer les informations de commande en outre sur la base des informations supplémentaires.

3. Composant de réseau (700) selon la revendication 2, dans lequel les informations supplémentaires comprennent des informations de couverture sur un ou plusieurs des réseaux de communication mobile (302, 303, 602, 603) associés aux abonnements et/ou aux densités d'utilisateurs et/ou au mouvement.

4. Composant de réseau (700) selon l'une quelconque des revendications 1 à 3, dans lequel le contrôleur (702) est configuré pour sélectionner ledit au moins un des réseaux de communication mobile (302, 303, 602, 603) sur la base des informations de performance de communication et dans lequel les informations de commande comprennent que ledit au moins un des réseaux de communication mobile (302, 303, 602, 603) doit être utilisé pour la communication.

5. Composant de réseau (700) selon l'une quelconque des revendications 1 à 4, dans lequel le contrôleur (702) est configuré pour sélectionner un type d'accès ou un type de réseau central dudit au moins un des réseaux de communication mobile (302, 303, 602, 603) sur la base des informations de performance de communication et dans lequel les informations de commande comprennent que le type d'accès ou le type de réseau central sélectionné doit être utilisé pour la communication.

6. Composant de réseau (700) selon l'une quelconque des revendications 1 à 5, dans lequel chaque abonnement est associé à un réseau de communication mobile domestique du terminal mobile (102, 301, 401, 604, 900) et dans lequel les réseaux de communication mobile (302, 303, 602, 603) associés aux abonnements sont les réseaux de communication mobile domestiques (302, 303, 602, 603).

7. Composant de réseau (700) selon l'une quelconque des revendications 1 à 5, dans lequel chaque abonnement est associé à un réseau de communication mobile visité du terminal mobile (102, 301, 401, 604, 900) et dans lequel les réseaux de communication mobile (302, 303, 602, 603) associés aux abonnements sont les réseaux de communication mobile visités (302, 303, 602, 603).

8. Composant de réseau (700) selon l'une quelconque des revendications 1 à 5, dans lequel chaque abonnement est associé à un réseau de communication mobile domestique et à un ou plusieurs réseaux de communication mobile visités (302, 303, 602, 603) et dans lequel l'interface de collecte de données (701) est configurée pour obtenir, pour chaque abonnement, une liste dudit un ou desdits plusieurs réseaux de communication mobile visités (302, 303, 602, 603), dans lequel le contrôleur (702) est configuré pour sélectionner ledit au moins un des réseaux de communication mobile (302, 303, 602, 603) dans les listes dudit un ou desdits plusieurs réseaux de communication mobile visités (302, 303, 602, 603) et dans lequel les informations de commande comprennent que ledit au moins un des réseaux de communication mobile (302, 303, 602, 603) doit être utilisé pour la communication.

9. Composant de réseau (700) selon la revendication 8, dans lequel l'interface de collecte de données (701) est configurée pour obtenir, pour chaque abonnement, la liste dudit un ou desdits plusieurs réseaux de communication mobile visités (302, 303, 602, 603) à partir du réseau de communication mobile domestique associé à l'abonnement.

10. Composant de réseau (700) selon l'une quelconque des revendications 1 à 9, dans lequel le composant de réseau (304, 405, 503, 605) met en œuvre un mécanisme d'intelligence artificielle et/ou un modèle d'apprentissage automatique et le contrôleur (702) est configuré pour déterminer les informations de commande en utilisant le mécanisme d'intelligence artificielle et/ou le modèle d'apprentissage automatique.

11. Composant de réseau (700) selon l'une quelconque des revendications 1 à 10, dans lequel l'interface de collecte de données (701) est configurée pour obtenir l'indication de la liste à partir du terminal mobile (102, 301, 401, 604, 900) et/ou du réseau de communication mobile d'information et/ou de l'application tierce (305, 404).

12. Composant de réseau (700) selon l'une quelconque des revendications 1 à 11, dans lequel l'interface de notification est configurée pour notifier au terminal mobile (102, 301, 401, 604, 900) d'effectuer la communication en utilisant ledit au moins un réseau de communication mobile selon les informations de commande via la couche application ou via la signalisation du plan de commande.

13. Procédé (800), exécuté par un composant de réseau (700), pour fournir une connectivité de réseau, comprenant :
l'obtention (801) d'une indication d'une liste d'abonnements au réseau mobile pour lesquels un terminal mobile (102, 301, 401, 604, 900) contient des modules d'identité d'abonné ;
l'obtention (802), pour chacun des abonnements, d'informations de performance de communication des réseaux de communication mobile (302, 303, 602, 603) associés aux abonnements ;
la détermination (803) d'informations de commande pour commander la communication via au moins un des réseaux de communication mobile (302, 303, 602, 603) associés aux abonnements sur la base des informations de performance de communication à un emplacement vers lequel le terminal mobile (301) est censé se déplacer lors de la sélection d'un réseau de communication mobile ; et
la notification (804) au terminal mobile (102, 301, 401, 604, 900) d'effectuer une communication en utilisant ledit au moins un des réseaux de communication mobile (302, 303, 602, 603) conformément aux informations de commande.

14. Terminal mobile (900), comprenant :
un transmetteur (901) configuré pour transmettre à un composant de réseau une indication d'une liste d'abonnements à un réseau mobile pour lesquels le terminal mobile (102, 301, 401, 604, 900) contient des modules d'identité d'abonné ;
un récepteur (902) configuré pour recevoir des informations de commande pour effectuer, à un emplacement vers lequel le terminal mobile (900) est censé se déplacer, une communication en utilisant au moins un réseau de communication mobile (118) de réseaux de communication mobile (118, 302, 303, 602, 603) associés aux abonnements ; et
un module de communication (903) configuré pour effectuer la communication conformément aux informations de commande.

15. Procédé (1000), mis en œuvre par un terminal mobile (900) pour effectuer une communication radio, comprenant :
la transmission (1001) d'une indication d'une liste d'abonnements à un réseau mobile pour lesquels le terminal mobile (102, 301, 401, 604, 900) contient des modules d'identité d'abonné à un composant de réseau ;
la réception (1002) d'informations de commande pour effectuer, à un emplacement vers lequel le terminal mobile (900) est censé se déplacer, une communication en utilisant au moins un réseau de communication mobile de réseaux de communication mobile (302, 303, 602, 603) associés aux abonnements ; et
l'exécution (1003) de la communication conformément aux informations de commande.
